# FASCICULE DE BREVET EUROPEEN

(11) **EP 4 466 514 B1**
(45) Date de publication et mention de la délivrance du brevet: **29.10.2025**
(21) Numéro de dépôt: 23701139.0
(22) Date de dépôt: 20.01.2023
(51) Int. Cl.: F41H 13/00, F41A 23/24

(54) **ARME LASER PORTÉE PAR UNE NACELLE**
LASERWAFFE AUF HÜLSENBASIS
POD-BORNE LASER WEAPON

(30) Priorité: 21.01.2022 FR 2200479
(43) Date de publication de la demande: 27.11.2024
(73) Titulaire: Compagnie Industrielle des Lasers Cilas, 45100 Orléans (FR)
(72) Inventeur: MONTAGNE, Jean-Eucher, 45000 Orléans (FR); SABOURDY, David, 45000 Orléans (FR); FORESTIER, Benjamin, 45000 Orléans (FR)
(74) Mandataire: Boüan du Chef du Bos, Louis-Paterne
(86) Numéro de dépôt international: PCT/EP2023/051321
(87) Numéro de publication internationale: WO 2023/139191

(56) Documents cités:
- EP-A1- 1 923 657
- EP-A2- 2 527 780
- WO-A1-2016/024265
- CN-A- 109 990 661
- FR-A1- 3 064 758

## Description

### Domaine de l'invention

Le domaine de l'invention est celui de l'armement, et plus précisément des armes émettant un faisceau laser de puissance permettant la destruction d'une cible. WO 2016/024265 Al décrit un tel arme laser.

### Art antérieur

Les objets volants, tels que les drones, peuvent poser de nombreux problèmes de sécurité. Ils peuvent en effet être utilisés par des forces armées, dans un cadre de conflit, à des fins de renseignement ou être porteurs d'armes ou de charges explosives et être utilisés à des fins agressives. Les forces de sécurité doivent donc avoir la capacité de détruire de tels objets volants pouvant constituer des menaces. Du fait de la petite taille, de l'agilité et du faible coût de tels objets volants, permettant leur déploiement en grand nombre, les armements traditionnellement utilisés pour la lutte antiaérienne se révèlent souvent inadaptés. De nouveaux systèmes d'armement, spécifiquement adaptés à la destruction de tels objets volants, ont donc été développés.

Il a ainsi été proposé une arme permettant de focaliser sur un objet volant un faisceau laser de puissance. Ce faisceau laser, en chauffant un point de l'objet volant, peut entraîner sa destruction.

La destruction d'un objet volant par un tel faisceau laser nécessite une durée de l'ordre d'une dizaine de secondes, pendant laquelle le faisceau doit être focalisé sur un même point de l'objet volant. Une adaptation des caractéristiques du faisceau laser, et notamment de sa puissance, permet de réduire cette durée mais il a été constaté que, au-delà d'un certain niveau de puissance, il n'était plus rentable d'obtenir de réduction sensible de cette durée nécessaire à la destruction d'un objet volant par une augmentation supplémentaire de puissance émise.

Cette durée relativement longue pendant laquelle l'arme laser doit être focalisée sur un même objet volant peut entraîner des difficultés en cas de menace simultanée par une pluralité d'objets volants. L'arme devra en effet, dans un tel cas, détruire successivement chacun des objets volants et sera, dans certains cas, incapable de les détruire tous.

Pour faciliter la destruction successive de plusieurs objets volants, il est souhaitable que l'arme laser soit capable de passer très rapidement d'une cible à une autre. Les moyens permettant d'orienter le faisceau laser pour le focaliser sur une cible doivent donc être extrêmement réactifs et efficaces.

Pour augmenter encore la capacité de destruction d'une pluralité d'objets volants, il est possible de multiplier le nombre des armes laser déployées. Une telle solution implique cependant des coûts élevés.

La présente invention a pour objectif de pallier ces inconvénients de l'art antérieur.

En particulier, un objectif de l'invention est de fournir une telle arme laser dont l'efficacité est améliorée par rapport aux solutions de l'art antérieur.

Un objectif particulier, pour au moins certains des mode de réalisation, est de fournir une telle arme laser dans laquelle les systèmes permettant d'orienter le faisceau laser pour pointer et focaliser ce faisceau laser sur une cible sont améliorés.

Un autre objectif, pour au moins certains des modes de réalisation, est de fournir une telle arme laser dont l'efficacité pour neutraliser simultanément et/ou successivement plusieurs cibles est améliorée.

Un autre objectif, pour au moins certains des modes de réalisation, est de fournir une telle arme laser dont le coût de production, de mise en œuvre et/ou d'exploitation peut être réduit, par rapport aux solutions de l'art antérieur.

### Exposé de l'invention

Ces objectifs, ainsi que d'autres qui apparaîtront plus clairement par la suite, sont atteints à l'aide d'une arme laser comprenant une nacelle, des moyens d'orientation de cette nacelle, et au moins un effecteur laser apte à émettre un faisceau laser, l'effecteur laser comprenant successivement, dans le sens de propagation du faisceau laser :
- une source laser,
- des premiers moyens optiques de déviation, aptes à dévier le faisceau laser,
- un objectif apte à focaliser le faisceau laser, cet objectif étant porté par la nacelle,
cette arme laser comprenant des moyens de commande commandant les moyens d'orientation de la nacelle et lesdits premiers moyens optiques de déviation dudit effecteur laser. Selon l'invention, cet effecteur laser comprend des seconds moyens optiques de déviation aptes à dévier le faisceau laser, ces seconds moyens optiques de déviation étant portés par la nacelle et placés après l'objectif, dans le sens de propagation du faisceau laser, ces seconds moyens optiques de déviation étant commandés par les moyens de commande.

Avec les seconds moyens optiques de déviation, le faisceau laser de sortie émis par l'effecteur laser peut être orienté par rapport à la position de la nacelle, sur des plages angulaires importantes. L'arme laser comporte ainsi des moyens plus rapides, efficaces et fiables pour pointer le faisceau laser de sortie vers une cible. Par ailleurs, l'orientation du faisceau laser pouvant varier par rapport à la direction de la nacelle, cette nacelle peut porter d'autres armes, ou d'autres effecteurs laser, qui peuvent être pointés vers des cibles différentes.

De préférence, les seconds moyens de déviation optique sont aptes à permettre une déviation commandée du faisceau sur une plage angulaire supérieure à 3°, et préférentiellement supérieure à 5°, et encore préférentiellement supérieure à 10°.

La plage angulaire est considérée, dans la présente demande, comme l'angle maximal formé entre deux orientations possibles du faisceau. Cette plage angulaire est de préférence centrée sur l'axe optique du faisceau sortant de l'objectif, qui est appelé, dans la présente demande, « axe optique de l'objectif ». Par ailleurs, cette plage angulaire permet de préférence une déviation du faisceau dans toutes les directions, autour de l'axe optique de l'objectif. Dans certains cas, il est même possible d'obtenir une déviation commandée du faisceau de plusieurs dizaines de degrés. Une déviation si importante permet au faisceau de s'orienter vers des cibles, indépendamment de la position de la nacelle.

De préférence, les premiers moyens optiques de déviation sont aptes à permettre une déviation commandée du faisceau sur une plage angulaire inférieure à 5 milliradians.

Cette déviation doit être de faible amplitude pour ne pas perturber le passage du faisceau dans l'objectif. Une telle déviation peut cependant être obtenue de façon très rapide et précise.

Selon un mode de réalisation avantageux, ces seconds moyens de déviation optique comprennent plusieurs lames prismatiques aptes à tourner autour de l'axe optique de l'objectif.

De tels moyens de déviation sont notamment connus sous le nom de diasporamètre, ou de prismes de Risley. La rotation des lames prismatiques+ peut facilement être motorisée, afin d'obtenir facilement et rapidement une déviation commandée d'un faisceau.

Selon un autre mode de réalisation possible, ces seconds moyens optiques de déviation peuvent comprendre un ou plusieurs réflecteurs mobiles.

De tels moyens optiques de déviation comprenant des miroir mobiles peuvent permettre des déviation du faisceau de très grande amplitude, par exemple de plusieurs dizaines de degrés.

Selon un mode de réalisation avantageux, l'effecteur laser comprend une fibre optique apte à conduire le faisceau laser entre la source laser et les premiers moyens de déviation.

Dans ce cas, avantageusement, les premiers moyens de déviation de l'effecteur laser sont portés par la nacelle, et la source laser de l'effecteur laser est placée en dehors de la nacelle.

Une telle solution a notamment pour avantage de permettre une réduction de la masse et du volume de la nacelle.

Selon un mode de réalisation avantageux, les moyens d'orientation de la nacelle comportent une tourelle portant la nacelle, cette tourelle étant apte à faire pivoter la nacelle autour de deux axes perpendiculaires l'un à l'autre.

Une telle tourelle est couramment utilisée pour orienter une nacelle de façon rapide et efficace. Cette nacelle peut porter, en plus de l'effecteur laser, d'autres éléments tels que, par exemple, des armes ou des capteurs, qui peuvent être orientés par la nacelle. Dans ce cas, le faisceau émis par l'effecteur laser peut être orienté dans une direction indépendante de l'orientation de ces armes ou de ces capteurs, grâce aux seconds moyens optiques de déviation.

Selon un mode de réalisation particulièrement avantageux, l'arme laser comporte au moins deux effecteurs laser distincts, chacun de ces effecteurs laser comprenant au moins un objectif porté par la nacelle, au moins l'un de ces effecteurs laser comprenant les seconds moyens de déviation optique du faisceau.

Ces seconds moyens optiques de déviation du faisceau permettent que les différents effecteurs laser, portés par la même nacelle, puissent être pointés dans des directions indépendantes et viser des cibles distinctes. De préférence, les effecteurs laser distincts présentent chacun des premiers et des seconds moyens optiques de déviation du faisceau tels que décrits ci-dessus. Il est à noter, en revanche, que ces effecteurs laser distincts peuvent, dans certaines configurations, partager certains composants, par exemple partager la même source laser. Ils sont néanmoins considérés comme distincts dans la mesure où ils permettent d'émettre des faisceaux distincts.

De façon avantageuse, les objectifs des effecteurs laser distincts sont orientés, sur ladite nacelle, selon des axes optiques non parallèles entre eux.

La plage angulaire globale dans laquelle les différents effecteurs laser portés par une même nacelle peuvent émettre les faisceau laser est ainsi augmentée.

### Description des figures

L'invention sera mieux comprise à la lecture de la description suivante de modes de réalisation préférentiels, donnée à titre de simple exemple figuratif et non limitatif, et accompagnée des figures parmi lesquelles :
- La [Fig.1] est une représentation schématique d'une arme laser selon un mode de réalisation possible de l'invention.
- La [Fig.2] est un diagramme représentant schématiquement les composants de l'arme laser de la [Fig.1].
- La [Fig.3] est un diagramme représentant schématiquement les composants de l'effecteur laser de l'arme laser de la [Fig.1].
- La [Fig.4] est une représentation schématique d'une arme laser selon un autre mode de réalisation possible de l'invention.
- La [Fig.5] est une représentation schématique d'une arme laser selon encore un autre mode de réalisation possible de l'invention.

### Description détaillée de modes de réalisation de l'invention

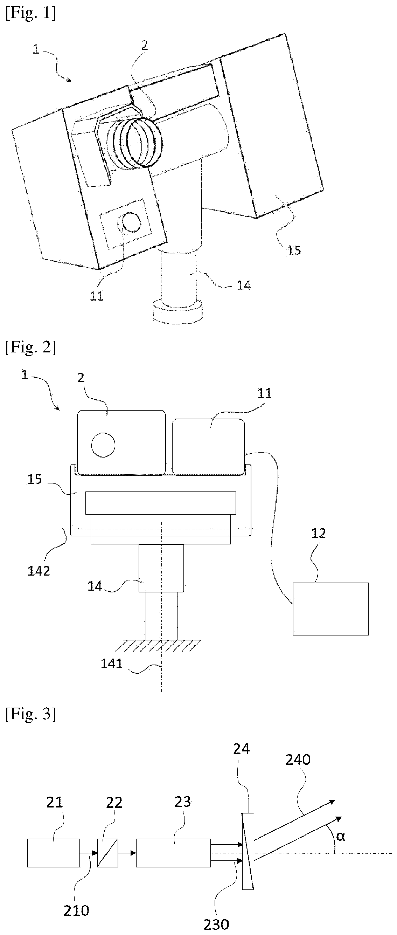

La [Fig.1] représente en perspective une arme laser 1 selon un mode de réalisation de l'invention, dont les composants principaux sont représentés schématiquement par le diagramme de la [Fig.2].

Cette arme laser 1 comprend une nacelle 15 orientable, qui porte certains des composants de l'arme laser 1. Cette nacelle est commandée, c'est-à-dire que son orientation peut être modifiée en réponse à des instructions de moyens de commande. Dans le mode de réalisation représenté par la [Fig.1], cette nacelle 15 est constituée par un boîtier métallique. Dans d'autre modes de réalisation possibles, une nacelle selon l'invention peut être constituée par tout support pouvant être orienté dans différentes directions, et capable de porter au moins une partie d'un effecteur laser.

Cette nacelle 15 est avantageusement portée par une tourelle 14 articulée qui permet d'orienter la nacelle 15 dans une direction souhaitée, en réponse aux instructions de moyens de commande. Dans le mode de réalisation représenté, la tourelle 14 est articulée selon deux axes : un axe 141 sensiblement vertical et un axe 142 sensiblement horizontal. Elle permet ainsi de faire varier l'orientation de la nacelle 15 qu'elle porte, par rapport au support sur lequel est fixée la tourelle 14, dans toutes les directions de l'espace.

Les mouvements des composants de la tourelle 14 sont avantageusement contrôlés par des servomoteurs aptes à modifier rapidement la position angulaire de la nacelle 15, en réponse aux instructions de moyens de commande. La tourelle 14 permet ainsi de modifier de façon assez réactive et efficace l'orientation de la nacelle 15 avec une très grande amplitude angulaire. Ces mouvements des composants de la tourelle 14, de la nacelle 15 et des composants portés par cette nacelle 15 impliquent cependant des forces d'inertie sensibles, du fait des masses de ces composants. Ces forces d'inertie imposent une limitation de la vitesse des mouvements de la nacelle.

La nacelle 15 porte, selon l'invention, au moins une partie d'un effecteur laser 2, apte à émettre un faisceau laser focalisé capable d'endommager ou de détruire une cible distante.

Les mouvements des composants de la tourelle 14, en modifiant l'orientation de la nacelle 15, permettent ainsi de modifier l'orientation du faisceau laser focalisé émis par l'effecteur laser 2, avec une très grande amplitude angulaire, afin d'orienter ce faisceau laser focalisé en direction de sa cible. Ainsi, à titre indicatif, la précision de l'orientation de la nacelle obtenue par les mouvements des composants de la tourelle est généralement de l'ordre de quelques centièmes de milliradian.

La précision de l'orientation obtenue par les mouvements des composants de la tourelle 14 est cependant insuffisante pour assurer le pointage précis du faisceau émis par l'effecteur laser 2 sur une cible de petite taille située à plusieurs centaines de mètres.

L'effecteur laser 2 est lui-même composé de plusieurs composants qui sont représentés schématiquement par la [Fig.3] :
- une source laser 21 émet un faisceau laser initial 210,
- des premiers moyens optiques de déviation 22 orientent ce faisceau laser initial 210,
- un objectif 23 focalise ce faisceau laser initial 210, pour former le faisceau laser focalisé 230,
- des seconds moyens optiques de déviation 24 orientent le faisceau laser focalisé 230 pour former le faisceau laser de sortie 240.

La source laser 21 qui émet le faisceau laser initial 210 peut comprendre une diode laser ou toute cavité laser apte à produire un faisceau et, le cas échéant, un ou plusieurs amplificateurs aptes à amplifier ce faisceau. Une telle source laser est bien connue de l'homme du métier. Elle est avantageusement commandée, c'est-à-dire qu'elle émet un faisceau laser ayant des caractéristiques souhaitées en réponse à des instructions de moyens de commande.

De façon avantageuse, la source laser 21 peut être conçue pour émettre le faisceau laser initial 210 dans une fibre optique, qui peut facilement transporter le faisceau laser initial 210.

Grace à une telle fibre optique, la source laser 21 peut être éloignée des autres composants de l'effecteur laser 2. Il est ainsi possible, par exemple que la plus grande partie des composants de l'effecteur laser 2 soit portée par la nacelle 15, alors que la source laser 21 est placée en dehors de la nacelle 15. Dans un tel cas, la source laser 21 est reliée aux autres composants de l'effecteur laser 2 par la fibre optique.

Selon l'invention, le faisceau laser initial 210 passe à travers des premiers moyens optiques de déviation 22 avant d'être focalisé par l'objectif 23. Ces premiers moyens optiques de déviation 22 sont avantageusement conçus pour orienter précisément dans une plage angulaire restreinte, le faisceau laser de sortie 240. Ils sont avantageusement commandés, c'est-à-dire qu'il permettent de faire varier l'orientation du faisceau laser de sortie 240 en réponse à des instructions de moyens de commande.

Ces premiers moyens optiques de déviation 22 peuvent par exemple être constitués par un diasporamètre, ou des prismes de Risley, composés de plusieurs lames prismatiques pouvant pivoter l'une par rapport à l'autre autour de l'axe optique. De tels moyens optiques de déviation sont connus, en eux-mêmes, pour l'orientation de faisceaux laser.

Dans un autre mode de réalisation possible, ces premiers moyens optiques de déviation 22 peuvent former un dispositif optique pour changer la direction de propagation d'un faisceau lumineux qui comprend, dans le sens de propagation du faisceau lumineux, un groupe de lentilles globalement divergent et un groupe de lentilles globalement convergent, le groupe de lentilles globalement divergent contenant, dans le sens de propagation du faisceau lumineux, une lentille fixe et un module optique comprenant au moins un élément optique mobile apte à modifier la direction de propagation du faisceau lumineux émergeant du groupe de lentilles globalement divergent. De tels dispositifs optiques sont connus de l'homme du métier et sont décrits, par exemple, dans le document FR3064758A1.

Dans un tel cas, les premiers moyens optiques de déviation 22 peuvent avoir pour effet de dévier angulairement le faisceau laser initial 210 avant son introduction dans l'objectif 23, et/ou de décaler le faisceau laser initial 210 de l'axe optique de l'objectif 23. Dans les deux cas, les premiers moyens optiques de déviation 22 ont pour effet de dévier angulairement le faisceau laser focalisé 230 sortant de l'objectif 23, et donc le faisceau laser de sortie 240.

Une telle déviation angulaire du faisceau laser de sortie 240 peut être obtenue par les premiers moyens optiques de déviation 22 en fonction d'une commande des moyens de commande, de façon très précise et avec une très grande réactivité. En effet, le faisceau laser initial 210 est avantageusement de faible diamètre. Les composants optiques mobiles des premiers moyens optiques de déviation 22 peuvent donc être de petite taille, et ne présenter qu'une très faible inertie lors de leurs mouvements. Il est ainsi possible de les déplacer de façon très rapide.

En revanche, la déviation angulaire du faisceau laser de sortie 240 obtenue par les premiers moyens optiques de déviation 22 ne peut présenter qu'une amplitude très limitée. En effet, une déviation de trop forte amplitude ne permettrait pas le passage correct du faisceau laser initial 210 dans l'objectif 23. À titre d'illustration, de tels premiers moyens optiques de déviation 22 peuvent permettre de dévier le faisceau laser de sortie 240 d'un angle de l'ordre du milliradian, avec une précision de l'ordre du centième de milliradian.

La combinaison de l'orientation commandée de la nacelle 15 par la tourelle 14, de très grande amplitude mais relativement peu précise et relativement peu réactive, et de la déviation commandée, par les premiers moyens optiques de déviation 22, du faisceau laser focalisé 230 par rapport à la nacelle 15, de faible amplitude mais très précis et très réactif, permet dans la pratique à l'arme laser 1 de pointer, sur une grande amplitude angulaire mais de façon très précise, le faisceau laser de sortie 240 émis par l'effecteur laser 2, afin qu'il atteigne une cible mobile lointaine et de petite taille.

Après son passage par les premiers moyens optiques de déviation 22, le faisceau laser traverse un objectif 23, qui est composé d'une succession de lentilles aptes à focaliser le faisceau laser de sortie 240 à une distance souhaitée. Le fonctionnement d'un tel objectif est connu, en lui-même, de l'homme du métier. Les lentilles composant cet objectif sont de préférence mobiles les unes par rapport aux autres afin de permettre un ajustement de la distance focale de l'objectif en fonction de la distance de la cible sur laquelle le faisceau doit être focalisé. Cet objectif est avantageusement commandé, c'est-à-dire qu'il permet de conférer au faisceau des caractéristiques de focalisation variables en réponse à des instructions de moyens de commande.

Pour que ce faisceau laser focalisé 230 puisse être focalisé sur un point lointain, il présente de préférence un diamètre très supérieur au diamètre du faisceau laser initial 210.

Selon l'invention, il est prévu d'ajouter, à la sortie de l'objectif 23, des seconds moyens optiques de déviation du faisceau 24 capables de modifier l'orientation du faisceau laser focalisé 230. Ces seconds moyens optiques de déviation du faisceau 24 sont avantageusement commandés, c'est-à-dire qu'il permettent de faire varier l'orientation du faisceau laser de sortie 240 en réponse à des instructions de moyens de commande.

Comme il est indiqué précédemment, ces seconds moyens optiques de déviation 24 ne sont généralement pas nécessaires pour orienter le faisceau laser focalisé 230. En effet, la combinaison des mouvements de la tourelle 14 et des premiers moyens optiques de déviation 22 suffit généralement à orienter ce faisceau laser focalisé 230 sur une grande plage angulaire et avec une grande précision, afin d'atteindre sa cible.

Ces seconds moyens optiques de déviation 24 peuvent par exemple être constitués par un diasporamètre, ou des prismes de Risley, composé de deux lames prismatiques pouvant pivoter, l'une par rapport à l'autre autour de l'axe optique. De tels moyens de déviation sont connus, en eux-mêmes, pour permettre la déviation contrôlée d'un faisceau.

Selon un autre mode de réalisation possible, ces seconds moyens optiques de déviation peuvent être constitués par un jeu de réflecteurs mobiles les uns par rapport aux autres, par exemple de miroirs mobiles, dont la position est commandée. Il est également possible que ces seconds moyens optiques de déviation comprennent une combinaison de plusieurs composants de type différents, par exemple de lames prismatiques pivotantes et de miroirs mobiles.

Ces seconds moyens optiques de déviation 24 sont avantageusement conçus pour permettre une amplitude de déviation du faisceau de sortie 240, par rapport à l'axe optique de l'objectif, d'un angle α supérieur à 3°, et de préférence supérieur à 5°. Il est même possible, dans des modes de réalisation préférentiels, que ces seconds moyens optiques de déviation permettent une amplitude de déviation du faisceau de sortie 240 d'un angle α supérieur à 10 ou à 20°.

Ces seconds moyens optiques de déviation 24 étant avantageusement situés après toutes les optiques mettant en forme le faisceau laser, il peuvent avoir un angle de déviation important sans que cela induise de distorsion pénalisante sur le faisceau de sortie 240.

L'arme laser 1 comprend avantageusement un système de détection et de pointage 11. Un tel système de détection et de pointage 11, qui est connu en lui-même, peut comprendre par exemple un ou plusieurs radars, un ou plusieurs LIDAR et une ou plusieurs caméras. Il permet de détecter les cibles potentielles, de mesurer précisément leur position et de suivre cette position. Ce système de détection et de pointage 11 peut être associé à une interface homme-machine 12 qui peut, par exemple, permettre à un opérateur de visualiser les cibles potentielles sur un écran. L'opérateur peut ainsi choisir s'il souhaite détruire l'une de ces cibles.

Par ailleurs, ce système de détection et de pointage peut comprendre les moyens de commande aptes à commander la source laser 21, les premiers moyens optiques de déviation 22, l'objectif 23 et les seconds moyens optiques de déviation 24.

Dans le mode de réalisation représenté, au moins certains des capteurs du système de détection et de pointage 11 sont portés par la nacelle 15. Il est cependant possible que d'autres composants de ce système de détection et de pointage 11 ne soient pas portés par la nacelle 15. Dans d'autres modes de réalisation, il est d'ailleurs possible qu'aucun des composants du système de détection et de pointage 11 ne soit porté par la nacelle 15. Ce système de détection et de pointage 11 fonctionne alors indépendamment de la position de la nacelle 15.

Si l'opérateur le demande, à travers l'interface homme-machine, le système de détection et de pointage 11 peut pointer l'effecteur laser 2 dans la direction d'une cible, afin de permettre à cet effecteur laser 2 d'émettre un faisceau laser focalisé sur cette cible, en vue de sa destruction. Pour cela, le système de détection et de pointage 11 comprend des moyens de commande commandant les mouvements de la tourelle 14, des premiers moyens optiques de déviation 22, de l'objectif 23 et des seconds moyens optiques de déviation 24, afin d'obtenir un pointage du faisceau laser de sortie 240 focalisé sur la cible.

La combinaison des mouvements de la nacelle 15, grâce à la tourelle 14, et des déviations de faisceau par les premiers moyens optiques de déviation 22 et les seconds moyens optiques de déviation 24 permet d'obtenir plusieurs avantages.

Ainsi, le système de détection et de pointage 11 qui commande ces différents moyens d'orientation du faisceau de sortie, peut à la fois modifier la direction du faisceau laser sur une grande amplitude angulaire, notamment à l'aide des mouvements de la nacelle 15, et corriger, notamment à l'aide des premiers moyens optiques de déviation plus précis, les fortes incertitudes liées à l'orientation de la nacelle 15 par la tourelle 14, afin d'assurer le pointage précis de la cible.

Par ailleurs, la combinaison des moyens d'orientation du faisceau laser de sortie 240 fournis par la tourelle 14 et par les seconds moyens optiques de déviation 24 permet avantageusement d'améliorer le temps d'un déplacement angulaire important du faisceau laser de sortie 240, par exemple pour passer d'une cible à une autre, et donc d'optimiser le temps de destruction successive de plusieurs cibles par l'arme laser.

Les seconds moyens optiques de déviation 24, qui sont placés sur un faisceau laser focalisé 230 de diamètre important, sont formés par des composants dont la taille, et donc le poids, sont relativement importants. Ces composants ont ainsi, quand ils sont mis en mouvement, une inertie plus forte que les composants de plus petite taille des premiers moyens optiques de déviation 22. En conséquence, ces seconds moyens optiques de déviation 24 présentent un temps de réaction plus long que les premiers moyens optiques de déviation 22. Ce temps de réaction est cependant plus court que celui de de la tourelle 14, ce qui permet de réduire le temps de réaction globale de l'arme laser 1, par exemple pour passer d'une cible à une autre.

Enfin, la combinaison de ces trois moyens d'orientation du faisceau laser de sortie 240 permet d'améliorer la fiabilité de l'arme laser, en permettant notamment l'orientation du faisceau laser même dans une situation dégradée dans laquelle un dysfonctionnement de la tourelle 14 réduirait sa précision ou sa vitesse d'orientation, voire empêcherait tout mouvement de la nacelle 15. Les seconds moyens optiques de déviation 24, en permettant une orientation du faisceau laser de sortie 240 par rapport à la position de la nacelle 15, sur une amplitude relativement importante, permettraient à l'arme laser 1 de continuer à détruire des cibles.

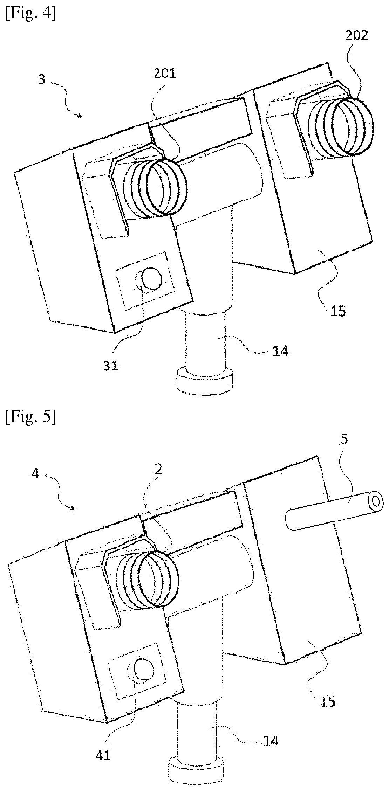

La [Fig.4] représente schématiquement une arme laser 3 selon un autre mode de réalisation possible de l'invention.

Cette arme laser comprend une nacelle 15 orientable, qui est portée par une tourelle 14 articulée. Cette nacelle et cette tourelle sont avantageusement identiques ou quasi-identiques à celles de l'arme laser 1 présentée précédemment. Cette nacelle 15 porte, dans le mode de réalisation représenté, deux effecteurs laser 201 et 202 distincts. Au moins un premier de ces effecteurs laser 201 est du type représenté par la [Fig.3], et comprend une source laser, des premiers moyens optiques de déviation, un objectif, et des seconds moyens optiques de déviation. Ainsi, le faisceau laser de sortie émis par cet effecteur laser peut être orienté, notamment par les seconds moyens de déviation, de façon indépendante des mouvements de la nacelle 15.

Le second effecteur laser 202 peut, dans certains modes de réalisation, ne pas présenter de seconds moyens optiques de déviation. Dans un tel cas, l'orientation du faisceau de sortie émis par ce second effecteur laser est uniquement réalisée par la combinaison des moyens d'orientation fournie par la tourelle, qui assurent son orientation sur une grande plage angulaire, et par les seconds moyens optiques de déviation qui assurent son orientation précise sur une plage angulaire faible.

Cependant, de façon préférentielle, le second effecteur laser 202 est, comme le premier effecteur laser 201, du type représenté par la [Fig.3], et comprend une source laser, des premiers moyens optiques de déviation, un objectif, et des seconds moyens optiques de déviation. Ainsi, chacun des deux effecteurs laser peut émettre un faisceau laser orientable par rapport à son axe de positionnement sur la nacelle, sur une plage angulaire de plus de 6°, et de préférence de plus de 10°.

Selon une solution préférentielle, les axes optiques du premier effecteur laser 201 et du second effecteur laser 202 peuvent ne pas être parallèles, mais au contraire former un angle qui peut, avantageusement, être de 10° à 20°. Grâce aux moyens optiques de déviation, chacun des effecteurs laser peut orienter son faisceau dans une zone angulaire centrée sur son axe optique, pour une position donnée de la nacelle. Du fait des divergences des faisceaux, les zones angulaires du premier effecteur laser 201 et du second effecteur laser 202 ne se recouvrent pas, mais sont voisines, ce qui permet de viser simultanément plusieurs cibles éloignées l'une de l'autre. Il est cependant avantageux que ces zones angulaires se recouvrent partiellement. Ainsi, si la nacelle 15 est positionnée de telle sorte qu'une cible soit placée dans la zone de recouvrement des zones angulaires de plusieurs effecteurs laser, ces effecteurs laser peuvent viser simultanément la même cible, ce qui peut faciliter sa destruction.

L'arme laser 3 comprend avantageusement un système de détection et de pointage 31 similaire au système de détection et de pointage 11 décrit précédemment, qui permet de détecter les cibles potentielles, de mesurer précisément leur position et de suivre cette position. Dans ce mode de réalisation, le système de détection et de pointage 31 comprend des moyens de commande aptes à commander les moyens d'orientation de la nacelle 15 et la source laser, les premiers moyens optiques de déviation, l'objectif et les seconds moyens optiques de déviation de chacun des effecteurs laser 201 et 202.

Quand ce système de détection et de pointage 31 détecte plusieurs cibles simultanément, il peut placer la nacelle 15 dans une position choisie pour permettre à chacun des effecteurs laser 201 et 202 d'être pointé en direction de l'une des cibles, en tenant compte des amplitudes de déviation possible de chacun de ces effecteurs laser. Si possible, cette position de la nacelle est choisie de telle sorte que chacun des faisceaux de sortie émis par l'un des effecteurs laser 201 et 202 puisse être déplacé autour de son axe de visée, afin de suivre sa cible.

Le système de détection et de pointage 31 commande ensuite les seconds moyens optiques de déviation du premier effecteur laser 201, et le cas échéant ceux du second effecteur laser 202, pour orienter leurs faisceaux vers les cibles distinctes. Le système de détection et de pointage 31 commande enfin les premiers moyens optiques de déviation de chacun des effecteurs laser 201 et 202, pour pointer précisément leurs faisceaux vers des cibles distinctes.

Comme le système de détection et de pointage 11, le système de détection et de pointage 31 peut être associé à une interface homme-machine pour permettre à un opérateur de décider de la destruction de chacune des cibles.

L'indépendance de l'orientation de chacun des faisceaux émis par les premier et second effecteurs laser, grâce aux seconds moyens de déviation optique dont est équipé au moins l'un de ces effecteurs laser, permet donc à l'arme laser 3 de détruire ou d'endommager simultanément plusieurs cibles. Une telle arme est donc sensiblement plus efficace, par exemple, face à une attaque coordonnée de plusieurs drones. Pourtant, une telle arme entraîne un coût moins important qu'une combinaison de deux armes laser du type représenté par la [Fig.1]. En effet, le coût de la tourelle 14 et de l'éventuel véhicule porteur représente une part importante du coût de revient d'une telle arme laser.

Dans d'autres modes de réalisation possibles, il est encore envisageable de faire porter par une même nacelle orientable plus de deux effecteurs laser qui permettront de viser simultanément un plus grand nombre de cibles, si ces effecteurs laser sont orientables indépendamment les uns des autres. Les axes optiques des objectifs de ces effecteurs laser peuvent avantageusement ne pas être parallèles entre eux.

Dans encore un autre mode de réalisation possible, il est également possible de faire porter par une même nacelle orientable un ou plusieurs effecteurs laser et une ou plusieurs armes conventionnelles.

Ainsi, à titre d'exemple, la [Fig.5] représente une arme laser 4 comprenant une nacelle 15 orientable, qui est portée par une tourelle 14 articulée. Cette nacelle et cette tourelle sont avantageusement identiques ou quasi-identiques à celles de l'arme laser 1 présentée précédemment. Cette nacelle 15 porte, dans le mode de réalisation représenté, un effecteur laser 2, qui est avantageusement identique à celui représenté par la [Fig.1]. Cet effecteur laser 2 comprend ainsi une source laser, des premiers moyens optiques de déviation, un objectif, et des seconds moyens optiques de déviation. Ainsi, le faisceau laser émis par cet effecteur laser 2 peut être orienté, notamment par les seconds moyens de déviation, de façon indépendante des mouvements de la nacelle 15.

Cette nacelle porte également une arme conventionnelle 5, telle qu'une mitrailleuse. De façon avantageuse, cette arme conventionnelle 5 peut être pointée vers sa cible par les mouvements de la nacelle 15. Le faisceau laser émis par l'effecteur laser 2 pouvant être orienté de façon indépendante des mouvements de la nacelle 15, cet effecteur laser 2 et l'arme conventionnelle 5 peuvent être simultanément pointés vers deux cibles distinctes.

## Revendications

1. Arme laser (1, 3, 4) comprenant une nacelle (15), des moyens d'orientation de ladite nacelle, et au moins un effecteur laser (2) apte à émettre un faisceau laser,
ledit effecteur laser (2) comprenant successivement, dans le sens de propagation dudit faisceau laser :
- une source laser (21),
- des premiers moyens optiques de déviation (22), aptes à dévier ledit faisceau laser,
- un objectif (23) apte à focaliser ledit faisceau laser, ledit objectif (23) étant porté par ladite nacelle (15),
ladite arme laser (1, 3) comprenant des moyens de commande commandant lesdits moyens d'orientation de ladite nacelle et lesdits premiers moyens optiques de déviation (22) dudit effecteur laser (2), **caractérisée en ce que** ledit effecteur laser (2) comprend des seconds moyens optiques de déviation (24) aptes à dévier ledit faisceau laser, lesdits seconds moyens optiques de déviation (24) étant portés par ladite nacelle (15) et placés après ledit objectif (23), dans le sens de propagation dudit faisceau laser,
lesdits seconds moyens optiques de déviation (24) étant commandés par lesdits moyens de commande.

2. Arme laser selon la revendication précédente, **caractérisée en ce que** lesdits seconds moyens optiques de déviation (24) sont aptes à permettre une déviation commandée dudit faisceau laser d'un angle supérieur à 3°, et préférentiellement supérieur à 5°, et encore préférentiellement supérieur à 10°.

3. Arme laser selon l'une quelconque des revendications précédentes, **caractérisée en ce que** lesdits premiers moyens optiques de déviation (22) sont aptes à permettre une déviation commandée dudit faisceau sur une plage angulaire inférieure à 5 milliradians.

4. Arme laser selon l'une quelconque des revendications précédentes, **caractérisée en ce que** lesdits seconds moyens optiques de déviation (24) comprennent plusieurs lames prismatiques aptes à tourner autour de l'axe optique dudit objectif (23).

5. Arme laser selon l'une quelconque des revendications précédentes, **caractérisée en ce que** lesdits seconds moyens optiques de déviation (24) comprennent un ou plusieurs réflecteurs mobiles.

6. Arme laser selon l'une quelconque des revendications précédentes, **caractérisée en ce que** ledit effecteur laser (2) comprend une fibre optique apte à conduire ledit faisceau laser entre ladite source laser (21) et lesdits premiers moyens optiques de déviation (22).

7. Arme laser selon la revendication précédente, **caractérisée en ce que** lesdits premier moyens optiques de déviation (22) dudit effecteur laser (2) sont portés par ladite nacelle (15), et **en ce que** ladite source laser (21) dudit effecteur laser (2) est placée en dehors de ladite nacelle (15).

8. Arme laser selon l'une quelconque des revendications précédentes, **caractérisée en ce que** lesdits moyens d'orientation de ladite nacelle comportent une tourelle (14) portant ladite nacelle (15), ladite tourelle (14) étant apte à faire pivoter ladite nacelle (15) autour de deux axes (141, 142) perpendiculaires l'un à l'autre.

9. Arme laser (3) selon l'une quelconque des revendications précédentes, **caractérisée en ce qu'**elle comporte au moins deux effecteurs laser (201, 202) distincts, chacun desdits effecteurs laser (201, 202) comprenant au moins un objectif (23) porté par ladite nacelle (15), au moins l'un desdits effecteurs laser (201, 202) comprenant lesdits seconds moyens optiques de déviation (22) du faisceau.

10. Arme laser selon la revendication précédente, **caractérisée en ce que** lesdits objectifs desdits effecteurs laser (201, 202) distincts sont orientés, sur ladite nacelle (15), selon des axes optiques non parallèles entre eux.

## Patentansprüche

1. Laserwaffe (1, 3, 4), umfassend eine Hülse (15), Mittel zum Ausrichten der Hülse und mindestens einen Lasereffektor (2), der geeignet ist, einen Laserstrahl auszusenden,
der Lasereffektor (2) nacheinander umfassend in der Ausbreitungsrichtung des Laserstrahls:
- eine Laserquelle (21),
- erste optische Ablenkungsmittel (22), die geeignet sind, den Laserstrahl abzulenken,
- ein Objektiv (23), das geeignet ist, den Laserstrahl zu fokussieren, wobei das Objektiv (23) durch die Hülse (15) getragen wird,
die Laserwaffe (1, 3) umfassend Steuermittel, die die Ausrichtungsmittel der Hülse und die ersten optischen Ablenkungsmittel (22) des Lasereffektors (2) steuern, **dadurch gekennzeichnet, dass** der Lasereffektor (2) zweite optische Ablenkungsmittel (24) umfasst, die geeignet sind, den Laserstrahl abzulenken, wobei die zweiten optischen Ablenkungsmittel (24) durch die Hülse (15) getragen werden und in der Ausbreitungsrichtung des Laserstrahls hinter dem Objektiv (23) platziert sind,
wobei die zweiten optischen Ablenkungsmittel (24) durch die Steuermittel gesteuert werden.

2. Laserwaffe nach dem vorstehenden Anspruch,
**dadurch gekennzeichnet, dass** die zweiten optischen Ablenkungsmittel (24) geeignet sind, eine kontrollierte Ablenkung des Laserstrahls um einen Winkel von mehr als 3°, vorzugsweise mehr als 5° und weiter bevorzugt mehr als 10°, zu ermöglichen.

3. Laserwaffe nach einem der vorstehenden Ansprüche,
**dadurch gekennzeichnet, dass** die ersten optischen Ablenkungsmittel (22) geeignet sind, eine kontrollierte Ablenkung des Strahls über einen Winkelbereich von weniger als 5 Milliradian zu ermöglichen.

4. Laserwaffe nach einem der vorstehenden Ansprüche,
**dadurch gekennzeichnet, dass** die zweiten optischen Ablenkungsmittel (24) mehrere prismatische Platten umfassen, die geeignet sind, sich um die optische Achse des Objektivs (23) zu drehen.

5. Laserwaffe nach einem der vorstehenden Ansprüche,
**dadurch gekennzeichnet, dass** die zweiten optischen Ablenkungsmittel (24) einen oder mehrere bewegbare Reflektoren umfassen.

6. Laserwaffe nach einem der vorstehenden Ansprüche,
**dadurch gekennzeichnet, dass** der Lasereffektor (2) eine optische Faser umfasst, die geeignet ist, den Laserstrahl zwischen der Laserquelle (21) und den ersten optischen Ablenkungsmitteln (22) zu leiten.

7. Laserwaffe nach dem vorstehenden Anspruch,
**dadurch gekennzeichnet, dass** die ersten optischen Ablenkungsmittel (22) des Lasereffektors (2) durch die Hülse (15) getragen werden, und **dass** die Laserquelle (21) des Lasereffektors (2) außerhalb der Hülse (15) platziert ist.

8. Laserwaffe nach einem der vorstehenden Ansprüche,
**dadurch gekennzeichnet, dass** die Mittel zum Ausrichten der Hülse einen Turm (14) aufweisen, der die Hülse (15) trägt, wobei der Turm (14) geeignet ist, die Hülse (15) um zwei senkrecht zueinander stehende Achsen (141, 142) zu schwenken.

9. Laserwaffe (3) nach einem der vorstehenden Ansprüche,
**dadurch gekennzeichnet, dass** sie mindestens zwei verschiedene Lasereffektoren (201, 202) aufweist, jeder der Lasereffektoren (201, 202) umfassend mindestens ein Objektiv (23), das durch die Hülse (15) getragen wird, mindestens einer der Lasereffektoren (201, 202) umfassend die zweiten optischen Ablenkungsmittel (22) des Strahls.

10. Laserwaffe nach dem vorstehenden Anspruch,
**dadurch gekennzeichnet, dass** die Objektive der verschiedenen Lasereffektoren (201, 202) auf der Hülse (15) entlang der optischen Achsen ausgerichtet sind, die nicht parallel zueinander sind.

## Claims

1. A laser weapon (1, 3, 4) comprising a pod (15), means for orienting said pod, and at least one laser effector (2) capable of emitting a laser beam,
said laser effector (2) successively comprising, in the direction of propagation of said laser beam:
- a laser source (21),
- first optical deflection means (22), capable of deflecting the laser beam,
- a lens (23) capable of focusing said laser beam, said lens (23) being carried by said pod (15),
said laser weapon (1, 3) comprising control means controlling said orientation means of said pod and said first optical means for deflecting (22) said laser effector (2),
**characterized in that** said laser effector (2) comprises second optical deflection means (24) capable of deflecting said laser beam,
said second optical deflection means (24) being borne by said pod (15) and positioned after said lens (23), in the direction of propagation of said laser beam,
said second optical deflection means (24) being controlled by said control means.

2. The laser weapon according to the preceding claim, **characterized in that** said second optical deflection means (24) are adapted to allow controlled deflection of said laser beam over an angle greater than 3°, preferably greater than 5°, and even more preferably greater than 10°.

3. The laser weapon according to any one of the preceding claims, **characterized in that** said first optical deflection means (22) are adapted to allow controlled deflection of said beam over an angular range of less than 5 milliradians.

4. The laser weapon according to any one of the preceding claims, **characterized in that** said second optical deflection means (24) comprise a plurality of prismatic blades rotatable about the optical axis of said lens (23).

5. The laser weapon according to any of the preceding claims, **characterized in that** said second optical deflecting means (24) comprise one or more movable reflectors.

6. The laser weapon according to any one of the preceding claims, **characterized in that** said laser effector (2) comprises an optical fiber suitable for conducting said laser beam between said laser source (21) and said first optical deflection means (22).

7. The laser weapon according to the preceding claim, **characterized in that** said first optical deflection means (22) of said laser effector (2) are borne by said pod (15), and **in that** said laser source (21) of said laser effector (2) is located outside said pod (15).

8. The laser weapon according to any one of the preceding claims, **characterized in that** said means for orienting said pod comprise a turret (14) carrying said pod (15), said turret (14) being capable of pivoting said pod (15) about two axes (141, 142) perpendicular to each other.

9. The laser weapon (3) according to any one of the preceding claims, **characterized in that** it comprises at least two distinct laser effectors (201, 202), each of said laser effectors (201, 202) comprising at least one lens (23) carried by said pod (15), at least one of said laser effectors (201, 202) comprising said second optical beam deflection means (22).

10. The laser weapon according to the preceding claim, **characterized in that** said lenses of said separate laser effectors (201, 202) are oriented, on said pod (15), along optical axes that are not parallel to one another.
